# EUROPEAN PATENT SPECIFICATION

(11) **EP 3 921 674 B1**
(45) Date of publication and mention of the grant of the patent: **29.05.2024**
(21) Application number: 20705112.9
(22) Date of filing: 03.02.2020
(51) Int. Cl.: G01T 3/00

(54) **INHOMOGENEOUS TRANSMUTATION DETECTOR AND THE METHOD OF ITS EVALUATION**
INHOMOGENER TRANSMUTATIONSDETEKTOR UND VERFAHREN DESSEN EVALUIERUNG
DETECTEUR DE TRANSMUTATION INHOMOGENE ET PROCEDE D'EVALUATION DU DETECTEUR

(30) Priority: 04.02.2019 CZ 20190055
(43) Date of publication of application: 15.12.2021
(73) Proprietor: Centrum Vyzkumu Rez S.R.O., 250 68 Husinec-Rez (CZ)
(72) Inventor: VIERERBL, Ladislav, 25067 Klecany (CZ); LORINCIK, Jan, 15531 Praha 5 (CZ)
(74) Representative: Novotny, Jaroslav
(86) International application number: PCT/IB2020/050832
(87) International publication number: WO 2020/161591

(56) References cited:
- JP-A- 2007 298 497

## Description

### Technical Fields

The invention of inhomogeneous transmutation detector and the method of its evaluation enables the measurement of dosimetric quantities in the nuclear-radiation fields, more specifically, the measurement of neutron fluences and spectra in the vicinity of the reactor core of nuclear power plant reactors and research reactors.

### Background Arts

A number of dosimetric quantities are used for the characterization of the radiation field near the sources of radiation, such as the absorbed dose, dose equivalent, fluence, etc. These quantities are in a certain way related and for the purpose of simplification one can speak about fluence or fluence rate. The detectors of the invention mentioned hereinafter can be used for various types of irradiation (alpha radiation, gamma, proton radiation), but they are most important for the neutron irradiation, therefore for the purpose of simplification the term neutron radiation will be used.

A number of methods for the measurement of fluence and energy spectra in the fields of neutron radiation is used. But for the higher fluence rates of neutrons, which are inside and in the closest vicinity of nuclear reactors, a basic method for the measurement of neutron fluences and spectra is the neutron activation detector method. It is based on the irradiation of the activation detector in the neutron field. A radionuclide or radionuclides are created during the irradiation and after the end of the irradiation their activity is measured, mostly using the spectrometry of gamma radiation. The detector is typically made of a pure element, an alloy or a compound of more elements of known composition and it is in the form of a foil, a wire or a chip. From the measured activity or activities and the knowledge of the respective dosimetric constants one can determine the neutron fluence under the assumption that the temporal history of the neutron fluence rate is known. One can assume, for example, that the fluence rate was constant or proportional to the thermal power of the reactor measured during operation. In case the activities related to different reactions are measured it is possible to estimate the energy spectrum of the neutron radiation. These reactions can relate to one element or more elements (detectors) at one place can be used. In principle, more than one-half of elements of the periodic table can be used for the activation method with Ti, Mn, Fe, Co, Ni, Cu, Nb, In and Au being the most frequently used ones. The main disadvantage of this method is that the accuracy of the resulting value of fluence significantly depends on the knowledge of the time dependence of the irradiation, which is usually not known with sufficient accuracy. Thus, a large uncertainty arises in case the time of irradiation is comparable or larger than the half-life of the activated radionuclide. Particularly for the measurement of fast neutron fluence, a suitable activation detector cannot be often found. Further disadvantage is the work with an active material and in case of surveillance programs the fact that the activity of the detectors after certain period of time decreases under the measurable limit.

The disadvantages of activation detectors eliminated the invention of the transmutation detectors (TMD) described in patent "A method of measurement of dosimetric quantities" CZ 304991 (application 2009-273). This method is analogical to the established one of the activation detectors, but with the difference that for the determination of the neutron fluence, it is not the activity of radioactive nuclides measured with radiometric methods that is used, but the concentration of the stable nuclides created during the irradiation and measured using analytical methods. High purity of material is a precondition, most importantly, the TMD material before the irradiation must not contain, as a higher-concentration impurity, the final nuclide that is created by transmutation and that is intended for the determination of the neutron fluence. After the exposure of the TMD in the neutron field and the decrease of the activity of induced radionuclides to a low level, the measurement of the concentration of the investigated nuclides created by transmutation is performed. The measurement is performed using one of the analytical methods for the measurement of concentration of nuclides or elements, such as the mass spectrometry, neutron activation analysis, nuclear magnetic resonance, x-ray fluorescent analysis, et al. From the measured concentrations, the probabilities of given reactions per one target nucleus are determined. From them, the neutron fluence and spectrum are determined in a similar way as in the method of activation detectors. For the final evaluation of the neutron spectra one can also combine the probabilities obtained using the method of transmutation detectors and the method of activation detectors. The advantages of the TMD method against the method of activation detectors are:
1) The accuracy of the resulting value of the fluence and the spectrum does not depend on the knowledge of the irradiation history
2) Most transmutation detectors have negligible activity even after the irradiation
3) The detectors store the information about the absorbed fluence infinitely long.

In patent CZ 304991, the TMD are described as a homogeneous material formed from a single pure element or isotope or from several elements or isotopes of known concentrations in a compound or alloy. This type of transmutation detectors will be denoted further in the text as HTMD (Homogeneous transmutation detector). The disadvantages of the HTMD are:
i) The limitation of the choice of nuclides for transmutation due to the requirement of high material purity that is not feasible for many materials for physical or economic reasons, which limits the choice of initial nuclides.
ii) The limitation of the choice of nuclides for transmutation due to the requirement of initial trace concentration of the final nuclide, which is created via transmutation and is intended for the determination of the neutron fluence. For HTMD, this practically disqualifies the use of nuclides that change via transmutation to a final nuclide of the same element, e.g., ¹⁵⁷Gd changes to ¹⁵⁸Gd with the natural abundance of 24.84 % in a material from Gd. Even if ¹⁵⁷Gd enriched by standard enrichment methods is used, the concentration of ¹⁵⁸Gd is not low enough.
iii) In some cases, the activity after the exposure of HTMD in a neutron field due to activation of other isotopes of the initial element, not used for the HTMD evaluation.

A further document known in the prior art is e.g. JP2007298497 which discloses a sample with known standard isotopic composition of the reactor material and further discloses determining the neutron fluence by means of mass spectrometry of the sample.

### Disclosure of Invention

The aforementioned disadvantages are solved by the inhomogeneous transmutation detector (ITMD) according to claim 1 and the method of its evaluation according to claim 2 of this invention.

The invention exploits the conventional TMD method and has its advantages, but the concrete design differs from the HTMD by that the initial (target) nuclide or element (nuclide hereinafter) of high purity is implanted or deposited into (implanted hereinafter) or onto the substrate (matrix, carrier). For the substrate a high purity material, with respect to the impurity of the final (transmuted) nuclide, is used. The evaluation of the detector then requires measurement of the concentration depth profiles of the initial and the final nuclide with high sensitivity, for which a method of secondary ion mass spectrometry (SIMS) can be advantageously used.

The achieved elemental and isotopic purity eliminates the aforementioned disadvantages and by that better detection parameters and user specification can be obtained.

### Brief Description of Drawings

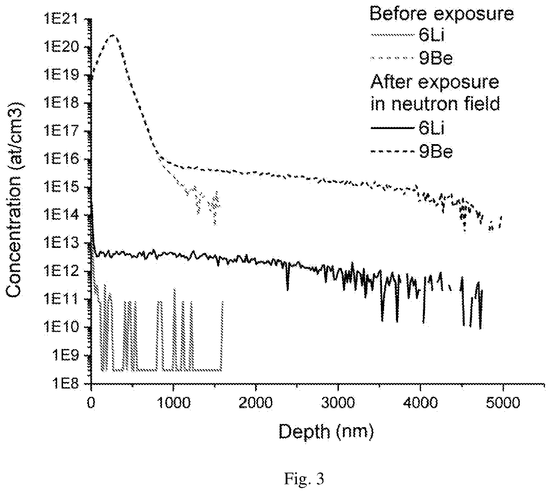

The invention will be explained in the drawings, where in Fig. 1, there are sketches of two examples of the invention - (a) implanted ITMD, (b) thin film ITMD. In Fig. 2, there are profiles of ¹⁰B and ⁷Li providing the resulting integral Int(⁷ Li) = 2×3,2×10¹⁴ at/cm² and in Fig. 3, there are profiles of ⁹Be and ⁶Li providing result Int(⁶Li) = 2×1,1×10⁹ at/cm².

### Made for Carrying out the Invention

### Example 1 - ITMD for thermal neutrons - ¹⁰B implantation

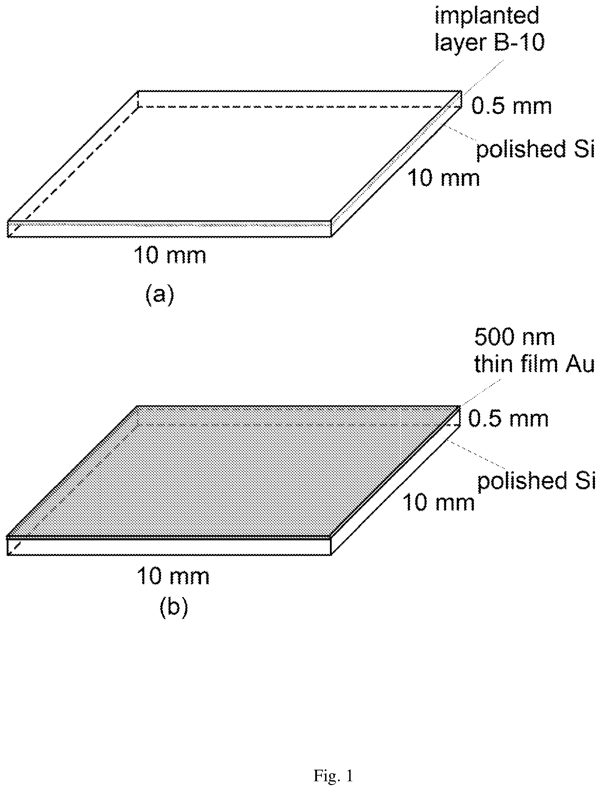

The ITMD was prepared such that the matrix was made of silicon with 9N purity, doped with phosphorus and with dimensions of 10×10×1 mm³. Then ¹⁰B (implantation energy 90 keV, implantation dose Φ(¹⁰B)=5×10¹⁵ at/cm²) was implanted into the matrix. This nuclide has one of the highest cross sections of all stable nuclides (3410 b) for the reaction with thermal neutrons ¹⁰B(n,α)⁷Li. The ITMD prepared in this way was irradiated in a vertical channel of the research reactor for 5.7 days. After the irradiation the concentration of ⁷Li nuclide created by transmutation was evaluated as a ratio of area density (= integral of the concentration profile) of ⁷Li atoms and the implantation dose of ¹⁰B. The evaluation was performed using SIMS (Fig. 1, profiles of ¹⁰B and ⁷Li) with the resulting integral Int(⁷Li) = 2×3,2×10¹⁴ at/cm². Using the cross section σ = 3410 barn, the fluence of thermal neutrons F = Int(⁷Li)/(Φ(¹⁰B) ×σ) = 3,8×10¹⁹ cm⁻² and the fluence rate 7,8×10¹³ cm⁻².s⁻¹ under the assumption of constant irradiation were determined.

### Example 2 - ITMD for fast neutrons - ⁹Be implantation

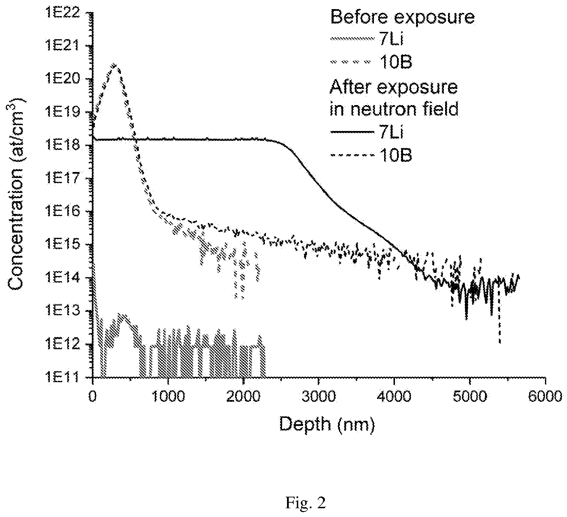

The ITMD was prepared such that the matrix was made of silicon with 9N purity, doped with boron and with dimensions of 10×10×1 mm³. Then ⁹Be (implantation energy 60 keV, implantation dose Φ(⁹Be )=5×10¹⁵ at/cm²) was implanted into the matrix. This nuclide has the cross section for the reaction with fast neutrons ⁹Be(n,α)⁶Li equal to 0.036 barn. The ITMD prepared in this way was irradiated in a vertical channel of the research reactor for 5.7 days. After the irradiation the concentration of ⁶Li nuclide created by transmutation was evaluated as a ratio of area density (= integral of the concentration profile) of ⁶Li and ⁹Be in the implanted part of the matrix. The evaluation was performed using SIMS (Fig. 2, profiles of ⁹Be and ⁶Li) with the resulting integral Int(⁶Li) = 2×1,1×10⁹ at/cm². Using the cross section σ = 0.036 b, the fluence of fast neutrons F = Int(⁶Li)/(Φ(⁹Be)×σ) = 1.2×10¹⁹ cm⁻² and the fluence rate 2.4×10¹³ cm⁻².s⁻¹ under the assumption of constant irradiation were determined.

### Example 3 - ITMD for thermal neutrons - thin film of Au

For the detection of thermal neutrons an ITMD based on ¹⁹⁷Au(n,γ)¹⁹⁸Hg nuclear reaction was prepared. Silicon with 9N purity doped with boron was used as a matrix. Then a thin film (500 nm) of Au was deposited onto that matrix. This ITMD was irradiated near the reactor core of the research nuclear reactor for 21.6 days. After the irradiation the concentration of ¹⁹⁸Hg nuclide created by transmutation was evaluated as a ratio of ¹⁹⁸Hg and ¹⁹⁷Au atoms in Au thin film. The evaluation was performed using SIMS with the result 2.6% Hg. Using the cross section σ = 88 barn and neglecting the influence of epithermal neutrons, the fluence of thermal neutrons 3.0×10²⁰ cm⁻² and the fluence rate 1.6×10¹⁴ cm⁻².s⁻¹ under the assumption of constant irradiation were determined.

Preparation of ITMD and its evaluation:
1) A very pure substrate from an electronic-quality material (better than 3N - 99.9%) is prepared, e.g., silicon of 9N purity, which will be additionally doped with boron or other suitable element for the increase of electrical conductivity.
2) Into the substrate or onto the surface of the substrate of 1) a chosen initial (target) nuclide is inserted using a suitable chemical or physical method, e.g. using ion implantation, namely, at concentration enabling the achievement of sufficient sensitivity (order of magnitude of atomic percents at the concentration maximum). Using a suitable technological procedure, e.g. the masking during the implantation or the deposition, one can obtain two- or threedimensional microstructures or nanostructures from the target nuclides with specific detection capabilities. Typically, the depth profile of the implanted nuclide has a shape of a Gaussian curve with full width at half maximum hundreds of nanometers. Implantation energies up to 100 keV for light elements up to 16 a.m.u., 200 keV for masses up to 35 a.m.u., 400 keV for masses up to 65 a.m.u., 800 keV for masses up to 150 a.m.u., 1 MeV for masses up to 200 a.m.u., and the doses of the order of 1×10¹⁶ at/cm² correspond to those parameters. In case of the reaction, where the initial isotope transmutes to the final isotope of the same element, the implanter must have sufficient mass resolving power (M/deltaM >> 200) to avoid a parasitic implantation of a neighbour-mass isotope. The suitable nuclides for the implantation for the ITMD are those, which do not generate radionuclides with a half-life of the order of days to years and which have high cross section for the related nuclear reaction. For the detection of thermal neutrons these are for example the nuclides of ¹⁰B, ¹¹³Cd, ¹⁴⁴Dy, ¹⁵⁷Gd, and ¹⁹⁷Au and then for the fast neutrons ⁹Be, ¹⁴N, ¹⁶O a ⁶³Cu.
3) The ITMDs are placed in the detection position and there they are irradiated for the time period of the neutron fluence measurement.
4) After the irradiation, a measurement of the concentration depth profile of initial and transmuted nuclides is performed. Because of the isotopic purity and relatively low amount of the implanted material (compared to HTMD) the activity of the ITMD shortly after the irradiation is low and it is possible to proceed to the evaluation. The measurement is performed primarily using the secondary ion mass spectrometry (SIMS) or another method, which is capable of the measurement of concentration depth profiles with detection limits better than ppm.

From the measured concentrations, the probabilities of the given reactions per one target nucleus are determined. From them the neutron spectrum of is determined using a procedure similar to that of the activation detectors. For the final evaluation of the neutron spectra one can also combine the probabilities obtained using the ITMD, HTMD, and the method of activation detectors.

### Industrial Application of the Invention

The invention is utilizable particularly for the determination of the fluence and spectrum of neutrons in the reactors of nuclear power plants and in the research reactors. More accurate characterization of the neutron field then leads to safer operation of the reactors and to the extension of the lifetime of the reactors in operation as a result of lowering the uncertainty of the neutron fluence measurements. The invention is also exploitable for the measurement of characteristics of the nuclear-radiation fields in other nuclear facilities, such as in particle accelerators, prospective in the thermonuclear reactors.

## Claims

1. An inhomogeneous transmutation detector for measurement in neutron radiation fields, more specifically, for the measurement of the neutron fluences and spectra in the vicinity of the reactor core of nuclear power plants or research reactors **characterized in that** the detector is made of a substrate, into which or onto which a chosen initial nuclide or element is inserted or deposited using a suitable chemical or physical method, wherein the initial nuclide is a stable nuclide to be irradiated in a neutron field, for the purpose of neutron detection, wherein the substrate with the initial nuclide before the irradiation of the detector contains as impurity maximally 0.1 at% of the final nuclide, wherein the final nuclide is a stable or long-life nuclide transmuted from the initial nuclide through a neutron reaction.

2. A method of evaluation of the inhomogeneous transmutation detector of claim 1 **characterized in that** the analytical methods used for its evaluation are selected from the class of methods, which enable accurate measurement of concentration depth profiles with high analytical sensitivity, better than 0.1 %.

## Patentansprüche

1. Inhomogener Transmutationsdetektor zur Messung in Neutronenstrahlungsfeldern, insbesondere zur Messung der Neutronenflüsse und -spektren in der Nähe des Reaktorkerns von Kernkraftwerken oder Forschungsreaktoren, **dadurch gekennzeichnet, dass** der Detektor aus einem Substrat besteht, in das oder auf das ein ausgewähltes Ausgangsnuklid oder -element mit einem geeigneten chemischen oder physikalischen Verfahren eingebracht oder abgelagert wird, wobei das Ausgangsnuklid ein stabiles Nuklid ist, das in einem Neutronenfeld zum Zwecke der Neutronendetektion bestrahlt wird, wobei das Substrat mit dem Ausgangsnuklid vor der Bestrahlung des Detektors als Verunreinigung maximal 0,1 at% des endgültigen Nuklids enthält, wobei das endgültige Nuklid ein stabiles oder langlebiges Nuklid ist, das vom ursprünglichen Nuklid durch eine Neutronenreaktion transmutiert wird.

2. Verfahren zur Auswertung des inhomogenen Transmutationsdetektors nach Anspruch 1, **dadurch gekennzeichnet, dass** die zu seiner Auswertung verwendeten analytischen Verfahren aus der Klasse der Verfahren ausgewählt werden, die eine genaue Messung von Konzentrationstiefenprofilen mit hoher analytischer Sensitivität von besser als 0,1 % ermöglichen.

## Revendications

1. Détecteur de transmutation non homogène pour la mesure, dans des champs de rayonnement neutronique, plus particulièrement pour la mesure des fluences et des spectres neutroniques à proximité du coeur de réacteur de centrales nucléaires ou de réacteurs de recherche, **caractérisé en ce que** le détecteur est constitué d'un substrat dans lequel ou sur lequel un nucléide ou un élément initial choisi est inséré ou dépose à l'aide d'un agent chimique ou physique approprié, méthode où le nucléide initial est un nucléide stable destine à être irradié dans un champs de neutrons à des fins de détection de neutrons, où le substrat avec le nucléide initial avant l'irradiation du détecteur contient comme impureté au maximum 0,1 at% du nucléide final, où le nucléide final est un nucléide stable ou à longue durée de vie transmué à partir du nucléide initial par une réaction neutronique.

2. Méthode d'évaluation du détecteur de transmutation non homogène selon la revendication 1 **caractérisé en ce que** les méthodes analytiques utilisées pour son évaluation sont sélectionnées dans la classe de méthodes permettant une mesure précise des profils de profondeur de concentration avec un sensibilité analytique élevée, de préférence supérieure à 0,1 %.
